# EUROPEAN PATENT SPECIFICATION

(11) **EP 2 383 185 B1**
(45) Date of publication and mention of the grant of the patent: **14.06.2017**
(21) Application number: 11250333.9
(22) Date of filing: 17.03.2011
(51) Int. Cl.: B64D 13/00

(54) **Ram flow modulation valve**
Stauluftmodulationsventil
Soupape à modulation de débit de vérin

(30) Priority: 27.04.2010 US 768446
(43) Date of publication of application: 02.11.2011
(73) Proprietor: Hamilton Sundstrand Corporation, Windsor Locks, CT 06096-1010 (US)
(72) Inventor: DeFrancesco, Gregory L., Simsbury, CT 06070 (US); Army, Donald E., Jr., Enfield, CT 06082 (US); Kline, Erin G., Vernon, CT 06066 (US)
(74) Representative: Taylor, Adam David

(56) References cited:
- EP-A1- 1 138 592
- EP-A1- 1 329 380
- US-A- 4 771 612
- US-A- 5 133 194
- US-A- 5 540 252
- US-A- 5 784 894
- US-A- 5 855 934
- US-A- 5 887 445

## Description

### BACKGROUND

The present invention relates to environmental control systems for aircraft and more particularly to flow control through ram air ducts.

In aircraft environmental control systems, ram air ducts are used to provide a flow of ambient air to interact with various aircraft systems. One or more heat exchangers are positioned within the ram air duct to cool system fluids, such as liquid in a cooling loop or engine bleed air used in an air conditioning system. Airflow through the ram air duct provides a heat sink for the fluids. During flight, air is forced through the ram air duct dependent on the speed of the aircraft. When not in flight, a fan positioned within the duct is driven to provide airflow. The fan acts as a restriction on airflow during flight and it is, therefore, desirable to bypass the fan to allow sufficient airflow to cool the heat exchangers. At other times, when full heat exchanger cooling flow is not needed, it is desirable to limit interaction of the airflow with the fan to, for example, limit drag and increase fuel efficiency. However, in order to efficiently induce airflow through the duct with the fan, it is desirable to prevent airflow through the duct from bypassing the fan. Typically, a check valve is positioned in the duct and closed when the fan is operating to produce a pressure differential across the fan. Such a check valve is described in U.S. Pat. No. 4,445,342 to Warner, which is assigned to United Technologies Corporation. During flight, the valve is opened to permit free flow through the duct, while the fan is permitted to spin freely.

Performance of the environmental control system is dependent on the ambient temperature of air being passed through the ram duct as well as the demands being placed on the systems being cooled by the ram air. For example, the fan is designed to generate sufficient airflow with the check valve closed to cool the fluid in the heat exchangers on extremely hot days when the cooled systems are operating at peak performance. Similarly, the ram duct is sized to provide sufficient flight-induced airflow to provide maximum cooling with the valve open. However, less airflow through the duct is needed during flight on colder days. Thus, it is desirable to adjust airflow through the duct to increase control over the cooling level provided by the ram air system for ambient temperatures between extreme hot and cold conditions. A typical check valve does not provide any intermediate flow between the open and closed positions. Attempts to control airflow through the ram air duct involve placement of doors at the entrance or outlet of the ram air duct. The position of the doors can be adjusted to vary airflow through the duct based on conditions and demand. Such doors are described in U.S. Pat. No. 5,704,218 to Christians et al., which is assigned to Hamilton Sundstrand Corporation. These doors, however, take up space that is not always available on the airframe.

EP 1 329 380 A1 discloses a heat exchanger arranged in a ram air duct for cooling compressed air in an air conditioning system.

### SUMMARY

The present invention is directed to a ram air system for an aircraft fluid system according to claim 1. The ram air system includes a ram duct, a diffuser, a fan and a modulating valve. The ram duct has an inlet for receiving ambient air and an outlet for discharging ambient air overboard. The diffuser is positioned within the ram duct to define a fan duct and a bypass duct. The fan is positioned within the fan duct. The modulating valve is positioned in the bypass duct.

### BRIEF DESCRIPTION OF THE DRAWINGS

FIG. 1 shows a schematic of a ram air system and an environmental control system used in an aircraft.
FIG. 2 shows a schematic of a concentric fan duct and bypass duct configuration of a ram duct used in the ram air system of FIG. 1.
FIG. 3A shows a schematic of a modulating fan bypass valve used in the ram air system of FIG. 2 in an open position.
FIG. 3B shows a schematic of the modulating fan bypass valve of FIG. 3A in a closed position.

### DETAILED DESCRIPTION

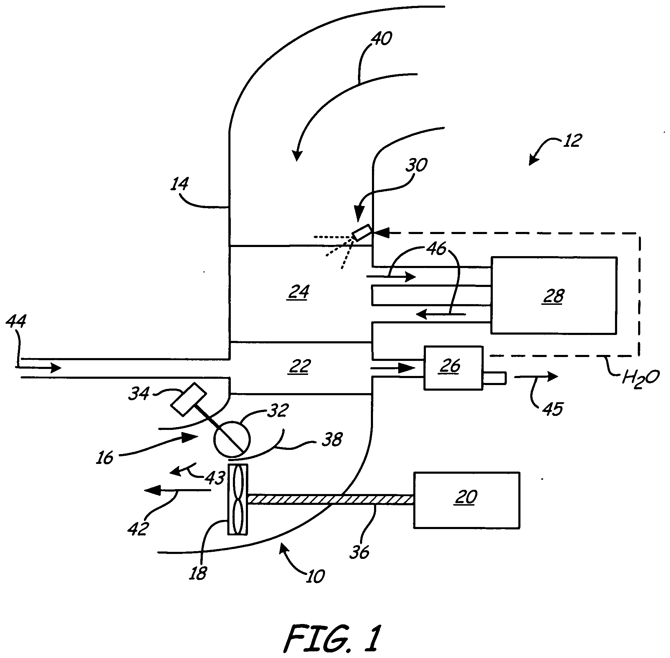

FIG. 1 shows a schematic of ram air system 10 interconnected with environmental control system (ECS) 12. Ram air system 10 includes ram duct 14, modulating valve 16, fan 18, fan drive 20, first ECS heat exchanger 22, second ECS heat exchanger 24, first cooling system 26, second cooling system 28 and spray nozzle 30. Modulating valve 16 includes valve body 32 and valve drive 34. Fan shaft 36 connects fan drive 20 to fan 18. Ram duct 14 includes diffuser 38. Ram air system 10 and ECS 12 are mounted onboard an airframe of an aircraft in an unpressurized bay. Ram duct 14 is in fluid communication with first cooling system 26 and second cooling system 28 through heat exchangers 22 and 24, respectively.

Ram air 40 is induced to flow through ram duct 14 by flight of the aircraft. Additionally, operation of fan 18 pulls ram air 40 from the inlet of duct 14 to produce fan air 42 near the outlet of ram duct 14. Bypass air 43 passes through ram duct 14 without passing through fan 18. Heat exchangers 22 and 24 are positioned within ram duct 14 to intersect the flow of ram air 40.

First heat exchanger 22 comprises an air-to-air heat exchanger through which bleed air 44 flows. Bleed air 44 is siphoned from a gas turbine engine powering the aircraft to provide pressurized air to first cooling system 26. Bleed air 44 is cooled using heat exchanger 22 and ram air 40 from within duct 14. The cooled air is then conditioned at first cooling system 26. First cooling system 26 removes humidity and moisture from the air and supplies conditioned air 45 for use within the cabin of the aircraft, as is known in the art. Water removed from the air is delivered to spray nozzle 30 where it is directed across heat exchangers 22 and 24 to provide additional cooling capacity.

Second heat exchanger 24 comprises a liquid-to-air heat exchanger through which cooling fluid 46 flows. Cooling fluid 46 circulates between heat exchanger 24 and second cooling system 28 in a closed-loop. Second cooling system 28 provides cooling to heat generating equipment or provides refrigeration. For example, second cooling system 28 may provide cooling to power electronics or avionics, or provide refrigeration for galley cooling systems. Although first heat exchanger 22 and second heat exchanger 24 are described as performing separate functions, the heat exchangers may be used together within ECS systems, such as are described in U.S. Pat. No. 5,704,218 to Christians et al. and U.S Pat. No. 6,681,591 to Defrancesco et al., both of which are assigned to Hamilton Sundstrand Corporation. However, heat exchangers 22 and 24 may provide any functions that may be needed onboard an aircraft as is known in the art.

Bleed air 44 is typically taken from the compression stage of the engine such that the temperature of the air is extremely hot. Likewise, cooling fluid 46 leaving second cooling system 28 is elevated in temperature from removing heat from cooled objects or components. Ram air system 10 cools bleed air 44 and cooling fluid 46 such that heat can continuously be removed from systems 26 and 28. Ram air 40 is used to cool heat exchangers 22 and 24 when the aircraft is in flight or otherwise in motion. Fan air 42 provides cooling to heat exchangers 22 and 24 when the aircraft is on the ground or otherwise not generating enough airflow from aircraft velocity. Fan 18 is positioned within diffuser 38 within ram duct 14. Fan shaft 36 extends through ram duct 14 from fan drive 20 to fan 18. Fan drive 20 comprises any suitable machine suitable for providing rotational input to fan shaft 36. For example, fan drive 20 may comprise an electric motor or a compressor driven by a turbine within first cooling system 26.

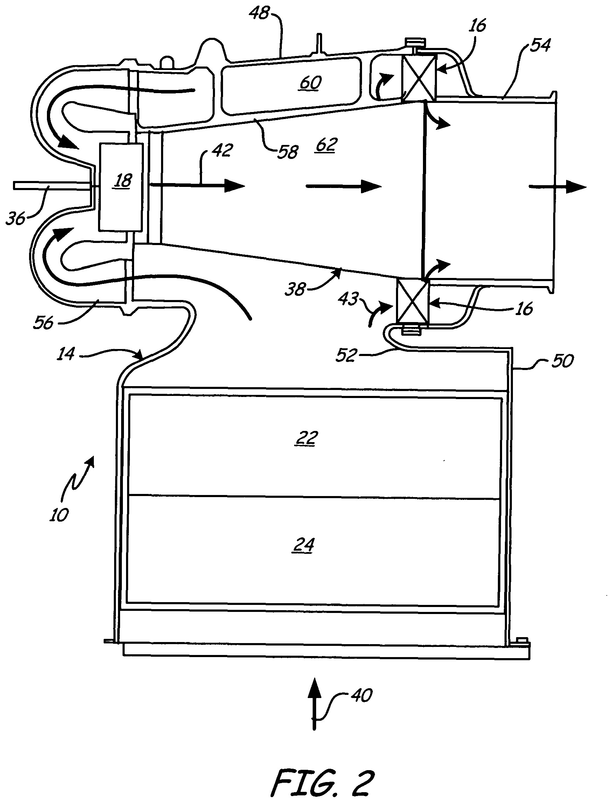

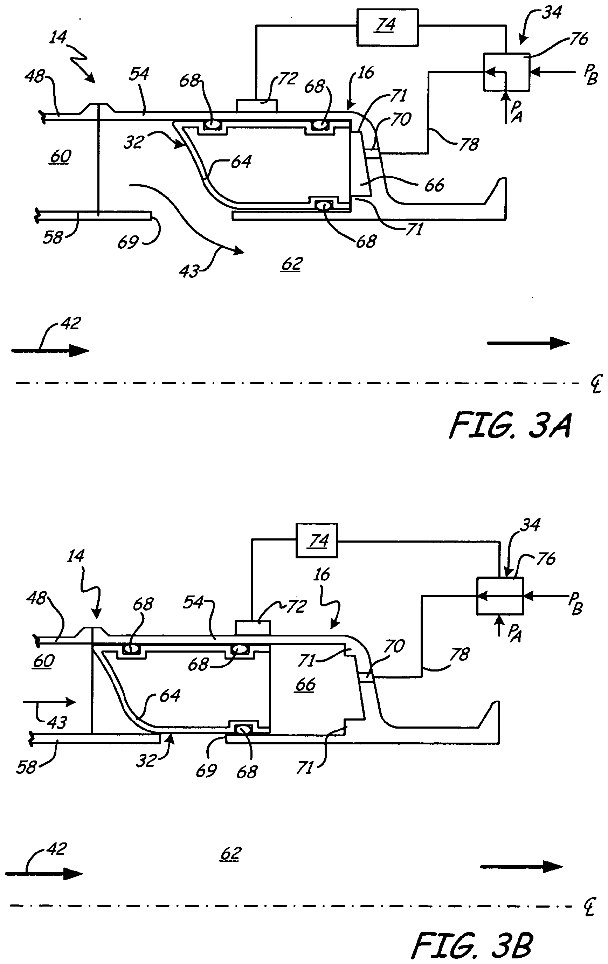

Modulating valve 16 adjusts the airflow through ram duct 14 to control the amount of air permitted to flow through duct 14. In the disclosed embodiment, valve body 34 comprises a shuttle body that horizontally (with reference to FIG. 2) advances and retreats within bypass duct 60 to cover and uncover a bypass window in annular body 58. Valve drive 34 adjusts the position of valve body 32 to closed, open or intermediate positions to modulate airflow within duct 14. As is shown in FIG. 2, modulating valve 16 adjusts the amount of bypass air 43 that is able to bypass fan 18 by passing around diffuser 38. Valve drive 34 may comprise any suitable actuator, such as a rotary shaft system, a crank and cam system, or a linearly driven piston, as is described with reference to FIGS. 3A and 3B.

FIG. 2 shows a schematic of ram air system 10 of FIG. 1 in which ram duct 14 and diffuser 38 comprise concentric bodies. Ram duct 14 includes annular body 48, heat exchanger section 50, inlet 52, outlet section 54 and turnabout section 56. Diffuser 38, which comprises annular body 58, is positioned within annular body 48.

Heat exchangers 22 and 24 are disposed within heat exchanger section 50. Heat exchanger section 50 is connected to annular body 48 at inlet 52. Annular bodies 48 and 58 comprise cylindrical or conical bodies that are ring-shaped or circinate and disposed about a common center line. Disposed as such, annular body 58 divides the space within annular body 48 into bypass duct 60 and fan diffuser 62. Turnabout section 56 comprises a hemi-toroidal body that connects a first end of annular body 48 with an inlet end of annular body 58. Fan 18 is positioned within the inlet end of annular body 58 adjacent turnabout section 56. Modulating valve 16 is positioned within a second end of annular body 48 outside of an outlet end of annular body 58. Modulating valve 16 and fan 18 operate together to switch airflow from series flow through annular bodies 48 and 58 to parallel flow through annular bodies 48 and 58. Fan 18 operates to allow pure fan-induced flow during ground operations when valve 16 is closed. Valve 16 is opened to allow pure ram-induced flow during flight operations when fan 18 is idling or not operating. Furthermore, valve 16 is modulated to allow different ratios of bypass air 43 for both ram-induced flow and fan-induced flow.

Fan shaft 36 extends through turnabout section 56 to connect with fan drive 20 (FIG. 1). Other airframe or aircraft components are mounted to ram duct 14. For example, first cooling system 26 can be mounted directly to turnabout section 56 to allow coupling of fan shaft 36 with a compressor shaft. The shape and configuration of heat exchanger section 50, turnabout section 56 and annular body 48 also permit ram air system 10 to be mounted in a compact manner to an airframe. Furthermore, ram duct 14 moves fan 18 out of the direct path of bypass air 43 to reduce drag generated by freewheeling of fan 18 and increase fuel efficiency during a pure ram-induced flow mode.

Ram air 40 enters heat exchanger section 50 and passes sequentially through heat exchangers 24 and 22. Heat exchangers 22 and 24 may, however, be mounted in parallel in other embodiments. Ram air 40 next passes through inlet 52 between heat exchanger section 50 and annular body 48. Within annular body 48, ram air 40 surrounds annular body 58, at which point the air flows toward turnabout section 56 and toward outlet section 54. Turnabout section 56 redirects flow of ram air 40 one-hundred-eighty degrees from flow out of annular body 48 to flow into annular body 58 where fan 18 is positioned. Before entering outlet section 54, ram air 40 must pass through modulating valve 16. The operation of modulating valve 16 determines how much, if any, of ram air 40 is permitted to flow directly into outlet section 54 from inlet 52 as bypass air 43, bypassing fan 18 and fan diffuser 62. The level of flow through valve 16 is determined based on the flight status of the aircraft to which ram air system 10 is mounted and the cooling demands being placed on heat exchangers 22 and 24. When the aircraft and ram air system 10 are in flight, modulating valve 16 is typically open such that ram air 40 passes through both bypass duct 60 and fan diffuser 62 by relative motion of ram duct 14 through the ambient atmosphere. When ram air 40 is not induced to flow through ram duct 14 by relative motion, fan 18 pushes fan air 42 through annular body 58, thereby pulling air through heat exchangers 22 and 24. Modulating valve 16 is typically fully closed to maximize the pressure differential between bypass duct 60 and fan diffuser 62 induced by fan 18. In either scenario, modulating valve 16 is actively controlled by a system monitor to vary the volume of bypass air 43 that passes through bypass duct 60.

FIG. 3A shows a schematic of modulating fan bypass valve 16, which includes valve body 32 and valve drive 34, of ram duct 14. Valve body 32 is mounted between ram duct 14 and outlet section 54. Valve body 32 includes annular piston 64, cylinder 66, seals 68, window 69, port 70 and stops 71. Valve drive 34 includes position sensor 72, controller 74, torque motor 76 and conduit 78. Bypass valve 16 is shown in an open position to permit airflow from bypass duct 60 to fan diffuser 62.

When valve 16 is open, airflow is induced through ram duct 14, either by ram-action or fan-action, such that fan air 42 and bypass air 43 are united within fan diffuser 62. Ram air 40 (FIG. 2) passes into bypass duct 60 and fan diffuser 62 from the open first end of annular body 48 (FIG. 2). Ram air 40 passes through fan 18 (FIG. 2) and into annular body 58 to become fan air 42. Ram air 40 also passes into bypass duct 60 to encounter valve 16 as bypass air 43. Bypass air 43 applies pressure to the forward face of annular piston 64. Valve body 32 and valve drive 34 comprise a pneumatic system that provides pressurized air to cylinder 66 to counter the forces generated on piston 64 by bypass air 43. For the depicted embodiment of FIG. 3A, valve body 32 is deactivated by valve drive 34 in the open position. Thus, valve body 32 defaults to an open position if valve drive 34 fails. However, valve 16 could be arranged to fail closed by the force of bypass air 43. Additionally, springs and other similar devices can be used to bias valve body 32 in forward or closed positions.

Torque motor 76 includes a valve switching device as is known in the art. The switching device includes two input ports: one that is open to ambient pressure P_{A} and one that is connected to pressurized air, such as engine bleed air pressure P_{B}. An output port of the valve switching device is connected to port 70 by conduit 78, which comprises any suitable structure. In the open position, torque motor 76 connects ambient air pressure P_{A} to port 70 through conduit 78 by blocking flow of bleed air, and bleed air pressure P_{A}, through the valve switching device. The bleed air can be dumped overboard when not needed. Piston 64 is pushed rearward within cylinder 66 by bypass air 43 and into stops 71 to uncover window 69. Window 69 is shown being positioned on outlet section 54, but can also be positioned on annular body 58 or another portion of ram duct 14. Seals 68, which comprise any suitable seals known in the art, prevent bypass air 43 from penetrating into cylinder 66. Thus, bypass air 43 is permitted to flow through outlet section 54 to bypass annular body 58 of diffuser 38. With annular piston 64 fully retracted, the full complement of bypass air 43 is permitted to pass through bypass duct 60 to provide the maximum amount of airflow through ram duct 14. This consequently provides heat exchangers 22 and 24 (FIG. 2) with the maximum amount of cooling.

When it is desirable to reduce the amount of cooling provided to the heat exchangers, controller 74 activates piston 64 to close window 69. Controller 74 is in communication with other control systems of the aircraft, such as controllers for first cooling system 26 and second cooling system 28. If it is determined that a temperature within these systems is too cold, controller 74 acts to reduce the cooling of heat exchangers 22 and 24 by ram air 40. Controller 74 uses input from position sensor 72 to determine the position of piston 64 within cylinder 66. In one embodiment, position sensor 72 comprises a linear variable differential transformer (LVDT). Controller 74 also activates valve drive 34 to provide input power to valve body 32 to close valve 16.

FIG. 3B shows a schematic of modulating fan bypass valve 16 of FIG. 3A in a closed position. In the closed position, torque motor 76 switches to allow bleed air pressure P_{B} to enter conduit 78 and closes off contact with ambient pressure P_{A}. The bleed air fills cylinder 66 and overcomes the pressure of bypass air 43 on cylinder 66. Seals 68 prevent the bleed air from entering bypass duct 60 and disrupting airflow within duct 14. Using feedback from sensor 72, controller 74 commands torque motor 76 to provide sufficient pressurization to cylinder 66 to cause piston 64 to move. A feedback loop is maintained between sensor 72, controller 74 and torque motor 76 so that the position of piston 64 can be actively controlled by the amount of bleed air torque motor 76 permits to pass through the switching device. The force of bypass air 43 prevents piston 64 from traveling too far into bypass duct 60. However, in other embodiments mechanical limits can be used to prevent piston 64 from disengaging outlet section 54. Piston 64 need only move far enough to completely cover window 69 to prevent any flow between bypass duct 60 and fan diffuser 62, as shown in FIG. 3B.

Modulation of piston 64 can be achieved in a variety of ways. Torque motor 76 provides an inexpensive means and uses readily available bleed air from a gas turbine engine. However, control of piston 64 with pneumatic pressure requires the use of position sensor 72. Even with position sensor 72, pneumatic power may be imprecise. Electro-mechanical actuators can provide more precise modulation of piston-type valves without the need for additional position sensors. For example, an electric linear actuator can provide direct mechanical movement of piston 64. Likewise, a crank and cam system can be used in conjunction with a linear actuator. However, such actuators are more expensive and require a large amount of electric power. In any embodiment, modulation of valve 16 is particularly advantageous in positioning valve body 64 into a plurality of intermediate positions between the open position of FIG. 3A and the closed position of FIG. 3B.

It is desirable to fully open valve 16 during flight operations to provide ram-induced cooling of heat exchangers 22 and 24. This provides the maximum amount of flow through ram duct 14, while also limiting the amount of flow through fan diffuser 62. Due to the serpentine pathway created by the placement of turnabout section 56 at the first end of annular body 48 and valve 16 at the second end of annular body 48, ram-induced air does not need to flow through fan 18. During high altitude flight conditions, fan 18 may become a flow restriction to ram air 40. Thus, when valve 16 is open, drag from fan 18 is reduced as ram air 40 bypasses fan diffuser 62 as bypass air 43.

It is desirable to fully close valve 16 during operation of fan 18 to provide fan-induced cooling of heat exchangers 22 and 24. This provides the maximum amount of flow through ram duct 14 by increasing the efficiency of fan 18. Again, due to the serpentine pathway produced within duct 14, fan-induced air must flow through fan 18 when valve 16 is closed. Maintaining valve 16 closed while fan 18 operates prevents ram air 40 from bypassing fan 18, thus maximizing the pressure differential across fan 18 and increasing fan efficiency.

It is, however, also desirable to actively modulate the position of piston 64 such that window 69 is partially covered during both ground and flight operations. During ground operations, valve 16 is typically closed so that fan 18 provides the maximum amount of cooling. However, on cold days when the cabin of an aircraft is cold soaked after a period of inactivity, it may be desirable to open valve 16 while fan 18 is operating. Opening valve 16 allows first cooling system 26 to rise to operating temperatures faster so that the cabin can be heated in less time and using less system energy. During flight operations, valve 16 is typically open to reduce drag from fan 18 and to increase the cooling capacities of first cooling system 26 and second cooling system 28. However, during extremely cold days or when demands on first cooling system 26 and second cooling system 28 are low, it is advantageous to partially close valve 16 to reduce cooling levels.

Modulation of valve 16 provides benefits over other types of ram duct modulation. For example, modulated ram duct doors fail in their last position, which can result in fan surge when aircraft velocity and the corresponding ram induced flows are reduced. In the described embodiment, valve 16 fails to an open position to eliminate such conditions. When ram air pressure rises in ram duct 14 to surge levels, the pressure on piston 64 from bypass air 43 will overcome pressure within cylinder 66 to prevent fan stall.

While the invention has been described with reference to an exemplary embodiment(s), it will be understood by those skilled in the art that various changes may be made and equivalents may be substituted for elements thereof without departing from the scope of the invention, which is defined by the claims. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A ram air system (10) for an aircraft fluid system, the ram air system comprising:
a ram duct (14) having:
an inlet for receiving ambient airflow (40); and
an outlet for discharging the ambient airflow overboard;
a diffuser (38) positioned within the ram duct to define a fan duct (62) and a bypass duct (60);
a fan (18) positioned within the fan duct; and
a modulating valve (16) positioned in the bypass duct, the modulating valve comprising:
a valve body positioned in the bypass duct to control flow of bypass air to an outlet of the bypass duct; and
a valve drive (34) connected to the valve body to change position of the valve body;
**characterised in that** the valve body comprises an annular piston (64) between the diffuser and the ram duct (14)^; and
the diffuser comprises:
an annular body (48) having:
an inlet end; and
an outlet end; and
wherein the fan (18) is positioned at the inlet end; and the ram duct (14) comprises:
a circinate body surrounding the annular body, the circinate body comprising:
a first end concentric about the inlet end;
a second end concentric about the outlet end;
an inlet positioned on the circinate body between the first end and the second end;
a turnabout configured to direct airflow from the first end to the inlet end; and
an outlet section having a window that defines the outlet of the bypass duct;
wherein the annular piston is positioned between the outlet end and the second end adjacent the outlet section.

2. The ram air system of claim 1 wherein the modulating valve (16) is adjustable between open, closed and intermediate states to regulate flow through the bypass duct.

3. The ram air system of claim 1 or 2 and further comprising a heat exchanger (22,24) positioned within the ram duct and configured to place a system fluid in thermal communication with the ambient airflow.

4. The ram air system of claim 1, 2 or 3 wherein the valve body covers the outlet of the bypass duct in the closed state, fully uncovers the outlet of the bypass duct in the open state, and partially covers the outlet of the bypass duct in an intermediate state.

5. The ram air system of any preceding claim wherein the valve drive comprises a pneumatic system.

6. The ram air system of claim 5 wherein the pneumatic system includes a torque motor to adjust an input source of the pneumatic system between an ambient air source and a compressed air source from the fluid system.

7. The ram air system of any one of claims 1-4 wherein the valve drive includes an electric motor.

8. An environmental control system comprising:
a fluid system;
a ram air duct as claimed in any preceding claim interconnected with the fluid system;
a heat exchanger mounted in the ram air duct;
a fluid circulation loop connecting the fluid system to the heat exchanger;
the modulating valve (16) positioned within the bypass duct being arranged to regulate airflow through the bypass duct and the fan duct.

9. The environmental control system of claim 8 wherein the modulating valve is positioned between the diffuser and the ram air duct such that, in an open position, the modulating valve allows airflow through the fan duct and the bypass duct simultaneously and, in a closed position, the modulating valve directs airflow from the bypass duct to the fan duct.

10. The environmental control system of claim 8 or 9 wherein:
the ram air duct includes a window defining the outlet of the bypass duct that connects the fan duct with the bypass duct; and
a valve body comprising a piston configured to slide within the bypass duct to cover, uncover and partially cover the window.

11. The environmental control system of claim 10 wherein:
the diffuser comprises an annular structure;
the fan duct comprises a circinate structure concentrically disposed about the annular structure; and
the valve body comprises an annular piston disposed between the annular structure and the circinate structure to define a piston chamber.

12. A method of flowing modulated airflow through a ram air duct as claimed in any preceding claim, the method comprising:
inducing airflow through a heat exchanger in a ram duct;
splitting the airflow in the ram duct between a fan duct and a bypass duct;
passing airflow through a fan in the fan duct; and
operating a modulating valve to vary an amount of airflow through the bypass duct by actively varying a position of the valve between open, closed and intermediate positions.

13. The method of claim 12 and further comprising:
inducing ram air flow through the ram duct by motion of the ram air duct;
permitting the fan within the fan duct to rotate freely; and
modulating the ram air flow through the ram duct by moving the modulating valve to an intermediate position to adjust a temperature of the heat exchanger; and/or further comprising:
inducing fan air flow through the ram duct by operation of a fan within the fan duct; and
modulating the fan air flow through the ram duct by moving the modulating valve to an intermediate position to adjust a temperature of the heat exchanger.

## Patentansprüche

1. Stauluftsystem (10) für ein Flüssigkeitssystem eines Luftfahrzeugs, wobei das Stauluftsystem Folgendes umfasst:
einen Staukanal (14), aufweisend:
einen Einlass zum Aufnehmen von Umgebungsluftstrom (40); und
einen Auslass zum Entladen des Umgebungsluftstroms über Bord;
einen Diffuser (38), der im Staukanal positioniert ist, um einen Lüftungskanal (62) und einen Umleitungskanal (60) zu definieren;
einen Lüfter (18), der im Lüftungskanal positioniert ist; und
ein Modulationsventil (16), das im Umleitungskanal positioniert ist, wobei das Modulationsventil Folgendes umfasst:
einen Ventilkörper, der im Umleitungskanal positioniert ist, um den Umleitungsluftstrom zu einem Auslass des Umleitungskanals zu steuern; und
einen Ventilantrieb (34), der mit dem Ventilkörper verbunden ist, um die Position des Ventilkörpers zu ändern;
**dadurch gekennzeichnet, dass** der Ventilkörper einen ringförmigen Kolben (64) zwischen dem Diffuser und dem Staukanal (14)^ umfasst; und der Diffuser Folgendes umfasst:
einen ringförmigen Körper (48), aufweisend:
ein Einlassende; und
ein Auslassende; und
wobei der Lüfter (18) am Einlassende positioniert ist; und der Staukanal (14) Folgendes umfasst:
einen spiralartigen Körper, der den kreisförmigen Körper umgibt, wobei der spiralartige Körper Folgendes umfasst:
ein erstes Ende, das konzentrisch um das Einlassende herum ist;
ein zweites Ende, das konzentrisch um das Auslassende herum ist;
einen Einlass, der auf dem spiralartigen Körper zwischen dem ersten Ende und dem zweiten Ende positioniert ist;
eine Wende, die konfiguriert ist, um Luftstrom vom ersten Ende zum Einlassende zu lenken; und
einen Auslassabschnitt, der ein Fenster aufweist, das den Auslass des Umleitungskanals definiert;
wobei der ringförmige Kolben zwischen dem Auslassende und dem zweiten Ende neben dem Auslassabschnitt positioniert ist.

2. Stauluftsystem nach Anspruch 1, wobei das Modulationsventil (16) zwischen einem offenen, geschlossenen und dazwischenliegenden Zustand anpassbar ist, um den Fluss durch den Umleitungskanal zu regulieren.

3. Stauluftsystem nach Anspruch 1 oder 2 und weiter umfassend einen Wärmetauscher (22, 24), der im Staukanal positioniert und konfiguriert ist, um eine Systemflüssigkeit in thermischen Austausch mit dem Umgebungsluftstrom zu bringen.

4. Stauluftsystem nach Anspruch 1, 2 oder 3, wobei der Ventilkörper den Auslass des Umleitungskanals im geschlossenen Zustand abdeckt, den Auslass des Umleitungskanals im offenen Zustand vollständig freilegt und den Auslass des Umleitungskanals in einem dazwischenliegenden Zustand teilweise abdeckt.

5. Stauluftsystem nach einem vorhergehenden Anspruch, wobei der Ventilantrieb ein pneumatisches System umfasst.

6. Stauluftsystem nach Anspruch 5, wobei das pneumatische System einen Drehmomentmotor enthält, um eine Eingangsquelle des pneumatischen Systems zwischen einer Umgebungsluftquelle und einer Druckluftquelle aus dem Flüssigkeitssystem anzupassen.

7. Stauluftsystem nach einem der Ansprüche 1-4, wobei der Ventilantrieb einen Elektromotor enthält.

8. Umweltkontrollsystem, umfassend:
ein Flüssigkeitssystem;
einen Stauluftkanal nach einem vorhergehenden Anspruch, der mit dem Flüssigkeitssystem verbunden ist;
einen im Stauluftkanal angebrachten Wärmetauscher;
eine Flüssigkeitszirkulationsschleife, die das Flüssigkeitssystem mit dem Wärmetauscher verbindet;
das Modulationsventil (16), das im Umleitungskanal positioniert und angeordnet ist, um den Luftstrom durch den Umleitungskanal und den Lüftungskanal zu regulieren.

9. Umweltkontrollsystem nach Anspruch 8, wobei das Modulationsventil zwischen dem Diffuser und dem Stauluftkanal positioniert ist, sodass das Modulationsventil in einer offenen Position einen simultanen Luftstrom durch den Lüftungskanal und den Umleitungskanal ermöglicht und das Modulationsventil in einer geschlossenen Position den Luftstrom vom Umleitungskanal zum Lüftungskanal lenkt.

10. Umweltkontrollsystem nach Anspruch 8 oder 9, wobei:
der Stauluftkanal ein Fenster enthält, das den Auslass des Umleitungskanals definiert und den Lüftungskanal mit dem Umleitungskanal verbindet; und
einen Ventilkörper, umfassend einen Kolben, der konfiguriert ist, um sich im Umleitungskanal zu verschieben, um das Fenster abzudecken, freizulegen und teilweise abzudecken.

11. Umweltkontrollsystem nach Anspruch 10, wobei:
der Diffuser eine ringförmige Struktur umfasst;
der Lüftungskanal eine spiralartige Struktur umfasst, die konzentrisch um die ringförmige Struktur herum angeordnet ist; und
der Ventilkörper einen ringförmigen Kolben umfasst, der zwischen der ringförmigen Struktur und der spiralartigen Struktur angeordnet ist, um eine Kolbenkammer zu definieren.

12. Verfahren zum Durchströmen von moduliertem Luftstrom durch einen Stauluftkanal nach einem vorhergehenden Anspruch, wobei das Verfahren Folgendes umfasst:
Induzieren von Luftstrom durch einen Wärmetauscher in einem Staukanal;
Aufteilen des Luftstroms im Staukanal zwischen einem Lüftungskanal und einem Umleitungskanal;
Passieren von Luftstrom durch einen Lüfter im Lüftungskanal; und
Betätigen eines Modulationsventils, um eine Menge an Luftstrom durch den Umleitungskanal zu variieren, indem eine Position des Ventils aktiv zwischen einer offenen, geschlossenen und dazwischenliegenden Position variiert wird.

13. Verfahren nach Anspruch 12 und weiter umfassend:
Induzieren von Stauluftstrom durch den Staukanal durch Bewegen des Stauluftkanals;
Ermöglichen des Lüfters im Lüftungskanal, sich frei zu drehen; und
Modulieren des Stauluftstroms durch den Staukanal durch Bewegen des Modulationsventils in eine dazwischenliegende Position, um eine Temperatur des Wärmetauschers anzupassen;
und/oder weiter umfassend:
Induzieren von Luftstrom des Lüfters durch den Staukanal durch Betätigen eines Lüfters im Lüftungskanal; und
Modulieren des Luftstroms des Lüfters durch den Staukanal durch Bewegen des Modulationsventils in eine dazwischenliegende Position, um eine Temperatur des Wärmetauschers anzupassen.

## Revendications

1. Système d'air dynamique (10) pour un système de fluide d'aéronef, le système d'air dynamique comprenant :
une conduite dynamique (14) ayant :
une entrée pour recevoir un débit d'air ambiant (40) ; et
une sortie pour évacuer le débit d'air ambiant par-dessus bord ;
un diffuseur (38) positionné au sein de la conduite dynamique pour définir une conduite de ventilateur (62) et une conduite de dérivation (60) ;
un ventilateur (18) positionné au sein de la conduite de ventilateur ; et
une soupape de modulation (16) positionnée dans la conduite de dérivation, la soupape de modulation comprenant :
un corps de soupape positionné dans la conduite de dérivation pour régler le débit d'air de dérivation vers une sortie de la conduite de dérivation ; et
une commande de soupape (34) raccordée au corps de soupape pour changer une position du corps de soupape ;
**caractérisé en ce que** le corps de soupape comprend un piston annulaire (64) entre le diffuseur et la conduite dynamique (14)^ ; et
le diffuseur comprend :
un corps annulaire (48) ayant :
une extrémité d'entrée ; et
une extrémité de sortie ; et
dans lequel le ventilateur (18) est positionné au niveau de l'extrémité d'entrée ; et
la conduite dynamique (14) comprend :
un corps circiné entourant le corps annulaire, le corps circiné comprenant :
une première extrémité concentrique autour de l'extrémité d'entrée ;
une seconde extrémité concentrique autour de l'extrémité de sortie ;
une entrée positionnée sur le corps circiné entre la première extrémité et la seconde extrémité ;
un demi-tour configuré pour diriger le débit d' air de la première extrémité à l'extrémité d'entrée ; et
une section de sortie ayant une fenêtre qui définit la sortie de la conduite de dérivation ;
dans lequel le piston annulaire est positionné entre l'extrémité de sortie et la seconde extrémité adjacente à la section de sortie.

2. Système d'air dynamique selon la revendication 1, dans lequel la soupape de modulation (16) est ajustable entre des états ouverts, fermés et intermédiaires pour réguler un débit à travers la conduite de dérivation.

3. Système d' air dynamique selon la revendication 1 ou 2 et comprenant en outre un échangeur de chaleur (22, 24) positionné au sein de la conduite dynamique et configuré pour placer un fluide de système en communication thermique avec le débit d'air ambiant.

4. Système d'air dynamique selon la revendication 1, 2 ou 3, dans lequel le corps de soupape couvre la sortie de la conduite de dérivation dans l'état fermé, découvre totalement la sortie de la conduite de dérivation dans l'état ouvert, et couvre partiellement la sortie de la conduite de dérivation dans un état intermédiaire.

5. Système d'air dynamique selon une quelconque revendication précédente, dans lequel la commande de soupape comprend un système pneumatique.

6. Système d'air dynamique selon la revendication 5, dans lequel le système pneumatique comporte un moteur couple pour ajuster une source d'entrée du système pneumatique entre une source d'air ambiant et une source d'air comprimé provenant du système de fluide.

7. Système d'air dynamique selon l'une quelconque des revendications 1 à 4, dans lequel la commande de soupape comporte un moteur électrique.

8. Système de conditionnement d'air comprenant :
un système de fluide ;
une conduite d'air dynamique telle que revendiquée dans une quelconque revendication précédente reliée au système de fluide ;
un échangeur de chaleur monté dans la conduite d'air dynamique ;
une boucle de circulation de fluide raccordant le système de fluide à l'échangeur de chaleur ;
la soupape de modulation (16) positionnée au sein de la conduite de dérivation étant agencée pour réguler un débit d'air à travers la conduite de dérivation et la conduite de ventilateur.

9. Système de conditionnement d'air selon la revendication 8, dans lequel la soupape de modulation est positionnée entre le diffuseur et la conduite d'air dynamique de sorte que, dans une position ouverte, la soupape de modulation permette un débit d'air à travers la conduite de ventilateur et la conduite de dérivation simultanément et, dans une position fermée, la soupape de modulation dirige le débit d'air de la conduite de dérivation à la conduite de ventilateur.

10. Système de conditionnement d'air selon la revendication 8 ou 9, dans lequel :
la conduite d'air dynamique comporte une fenêtre définissant la sortie de la conduite de dérivation qui raccorde la conduite de ventilateur à la conduite de dérivation ; et
un corps de soupape comprenant un piston configuré pour coulisser au sein de la conduite de dérivation pour couvrir, découvrir et couvrir partiellement la fenêtre.

11. Système de conditionnement d'air selon la revendication 10, dans lequel :
le diffuseur comprend une structure annulaire ;
la conduite de ventilateur comprend une structure circinée disposée de façon concentrique autour de la structure annulaire ; et
le corps de soupape comprend un piston annulaire disposé entre la structure annulaire et la structure circinée pour définir une chambre de piston.

12. Procédé d'écoulement de débit d'air modulé à travers une conduite d'air dynamique telle que revendiquée dans une quelconque revendication précédente, le procédé comprenant :
l'entraînement d'un débit d'air à travers un échangeur de chaleur dans une conduite dynamique ;
la séparation du débit d'air dans la conduite dynamique entre une conduite de ventilateur et une conduite de dérivation ;
le passage du débit d'air à travers un ventilateur dans la conduite de ventilateur ; et
l'actionnement d'une soupape de modulation pour faire varier une quantité de débit d'air à travers la conduite de dérivation en faisant varier activement une position de la soupape entre des positions ouvertes, fermées, et intermédiaires.

13. Procédé selon la revendication 12 et comprenant en outre :
l'entraînement d'un débit d'air dynamique à travers la conduite dynamique par un mouvement de la conduite d'air dynamique ;
l'autorisation du ventilateur au sein de la conduite de ventilateur à tourner librement ; et
la modulation du débit d'air dynamique à travers la conduite dynamique en déplaçant la soupape de modulation à une position intermédiaire pour ajuster une température de l'échangeur de chaleur ; et/ou comprenant en outre :
l'entraînement d'un débit d'air de ventilateur à travers la conduite dynamique par actionnement d'un ventilateur au sein de la conduite de ventilateur ; et
la modulation du débit d'air de ventilateur à travers la conduite dynamique en déplaçant la soupape de modulation à une position intermédiaire pour ajuster une température de l'échangeur de chaleur.
